# FASCICULE DE BREVET EUROPEEN

(11) **EP 2 408 672 B1**
(45) Date de publication et mention de la délivrance du brevet: **28.09.2016**
(21) Numéro de dépôt: 10706664.9
(22) Date de dépôt: 05.03.2010
(51) Int. Cl.: B64G 1/10, B64G 1/16, B64G 1/58, B64G 1/62

(54) **DISPOSITIF ATTERRISSEUR DE SONDE SPATIALE ET PROCEDE D'ATTERRISSAGE D'UNE SONDE MUNIE D'UN TEL DISPOSITIF**
LANDEVORRICHTUNG FÜR EINE RAUMSONDE UND LANDEVERFAHREN FÜR EINE SONDE AUSGERÜSTET MIT EINER SOLCHEN VORRICHTUNG
LANDING GEAR FOR SPACECRAFT AND METHOD OF LANDING A SPACECRAFT PROVIDED WITH SUCH A LANDING GEAR

(30) Priorité: 17.03.2009 FR 0951679
(43) Date de publication de la demande: 25.01.2012
(73) Titulaire: Airbus Defence and Space SAS, 78130 Les Mureaux (FR)
(72) Inventeur: AUGER, Valery, F-33460 Arsac (FR); BALEMBOY, Christophe, F-33700 Merignac (FR); LAINE, Robert André, F-17138 ST XANDRE (FR); PERKINSON, Marie-Claire, Bedforshire Bedfordshire SG18 0EF (GB)
(74) Mandataire: Ipside
(86) Numéro de dépôt international: PCT/EP2010/052841
(87) Numéro de publication internationale: WO 2010/105925

(56) Documents cités:
- US-B1- 6 227 494
- MUIRHEAD B K: "Mars Pathfinder flight system design and implementation" AEROSPACE APPLICATIONS CONFERENCE, 1996. PROCEEDINGS., 1996 IEEE ASPEN, CO, USA 3-10 FEB. 1996, NEW YORK, NY, USA,IEEE, US, vol. 2, 3 février 1996 (1996-02-03), pages 159-171, XP010159045 ISBN: 978-0-7803-3196-9
- NOVARA M ET AL: "Robotics for lunar surface exploration" ROBOTICS AND AUTONOMOUS SYSTEMS, ELSEVIER SCIENCE PUBLISHERS, AMSTERDAM, NL, vol. 23, no. 1-2, 1 mars 1998 (1998-03-01) , pages 53-63, XP004111626 ISSN: 0921-8890

## Description

La présente invention concerne un dispositif atterrisseur de sonde spatiale et un procédé d'atterrissage d'une sonde munie d'un tel dispositif.

Plusieurs dispositifs et méthodes sont connus pour l'atterrissage de sondes spatiales sur des objets célestes.

Dans le cas des missions lunaires l'alunissage d'un module lunaire porteur d'un véhicule lunaire a par exemple été réalisé avec l'aide de rétrofusées, le module lunaire étant adapté à redécoller.

Dans le cas de missions sur des planètes pourvues d'une atmosphère, des parachutes ont par exemple été utilisés pour ralentir les sondes, les sondes étant portées par un module support muni de ballons d'amortissement de l'impact au sol.

On constate que l'ensemble des sondes réalisées à ce jour comprennent une structure porteuse et une charge utile, cette dernière étant par exemple un module roulant de type "rover" amarré sur la structure porteuse.

La structure porteuse est adaptée à amortir le choc de l'atterrissage et se trouve sous la charge utile après l'atterrissage.

Dans le cas où la charge utile est un module apte à se déplacer tel qu'un module roulant, cette charge, pour être opérationnelle, doit descendre de la structure porteuse après l'atterrissage.

Un système de déchargement, rampes, grue ou autre doit donc être prévu, ce système accroissant la masse de l'ensemble.

En outre, lorsque la sonde atterrit à l'aide de ballons ou de parachutes, la charge utile doit traverser une zone où se trouve des restes du système de descente comme des liens ou de la toile dégonflée et il existe un risque que les roues de la charge utile s'emmêlent dans ces restes.

Dans un tel cas, des pans inclinés ou rampes peuvent être prévus pour recouvrir la zone où se trouvent les ballons dégonflés comme notamment prévu dans le projet ExoMars de l'ESA.

Pour pallier à ces problèmes, la sonde appelée "Mars Scientific Laboratory" de la NASA est prévue pour utiliser un autre concept basé sur une structure porteuse comportant un dispositif parachute ralentisseur, libérant ensuite un module de transport qui effectuera un vol quasi-stationnaire propulsé au dessus du sol martien pour descendre un module martien jusqu'au sol au moyen d'une grue et d'un câble.

Un tel vol stationnaire est une solution complexe et coûteuse en matière de propergols par contre cette solution évite que le site d'atterrissage du module soit encombré de restes du système de descente et permet de poser le module dans une zone bien définie.

Dans ce cadre, le document US 6 227 494 B1 décrit un module atterrisseur pourvu de jambes rétractables et déployables munies de moyens d'amortissement.

Le document MUIRHEAD B K: "Mars Pathfinder flight system design and implementation",

AEROSPACE APPLICATIONS CONFERENCE, 1996 PROCEEDINGS, 1996 IEEE ASPEN, CO, USA 3-10 FEB. 1996, NEW YORK, NY, USA,IEEE, US, vol. 2, 3 février 1996 (1996-02-03), pages 159-171, XPO10159045 décrit un module atterrisseur comportant des panneaux solaires en pétales repliés vers le haut du module et se déployant à plat sur le sol. Un engin mobile est fixé sur une face d'un panneau solaire.

Le document XP004111626 décrit un module atterrisseur comportant un engin mobile qui est libéré par une rampe.

La présente invention a pour objectif de réaliser un dispositif atterrisseur de sonde spatiale d'utilisation simplifiée et adapté pour amener au sol une sonde spatiale telle qu'un module roulant et faciliter son déploiement.

Pour ce faire, la présente invention propose une sonde spatiale comportant un module de descente porteur d'un engin d'exploration mobile, pour laquelle le module de descente est un module atterrisseur à l'intérieur duquel s'accroche l'engin d'exploration mobile, le module atterrisseur étant muni de jambes d'atterrissage adaptées à se déployer au dessous du niveau inférieur de l'engin d'exploration mobile et l'engin d'exploration mobile s'accroche dans une partie inférieure du module atterrisseur de sorte que l'engin d'exploration mobile puisse être libéré du module par le dessous du module.

La présente invention propose en outre un procédé de déploiement d'une sonde spatiale comportant un module de descente et d'atterrissage porteur d'un engin d'exploration mobile, pour lequel l'engin d'exploration mobile s'accroche sous le module de descente, le procédé comportant une séquence d'atterrissage de la sonde comportant:
- une phase de freinage du module de descente et d'atterrissage conduit par propulsion au moyen de tuyères d'éjection de gaz propulsifs,
- une étape de déploiement de jambes d'atterrisseur du module de descente et d'atterrissage,
- une étape d'atterrissage du module de descente et d'atterrissage pourvu de l'engin d'exploration mobile,
- une étape de dépose de l'engin d'exploration mobile entre les jambes d'atterrisseur module de descente et d'atterrissage posé au sol.

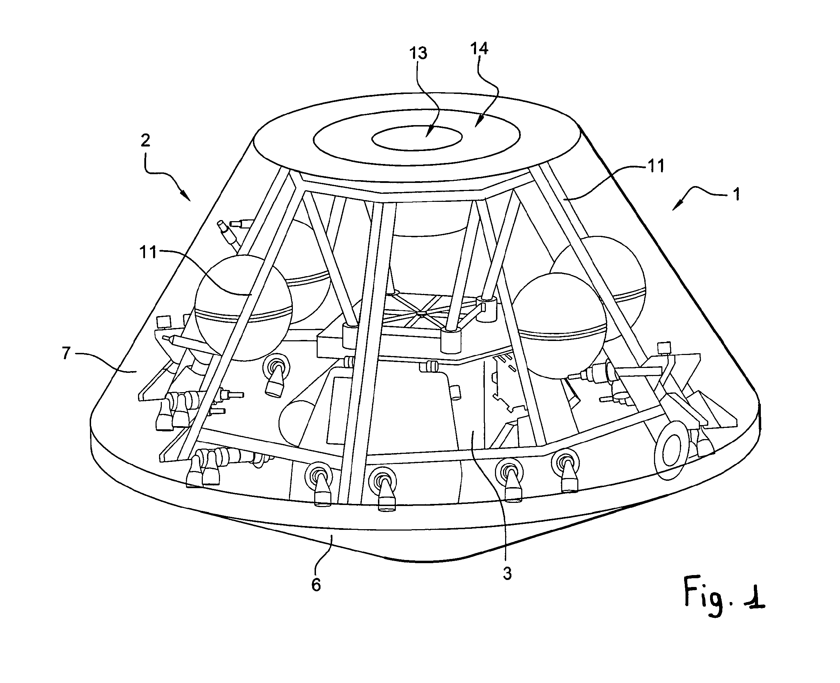

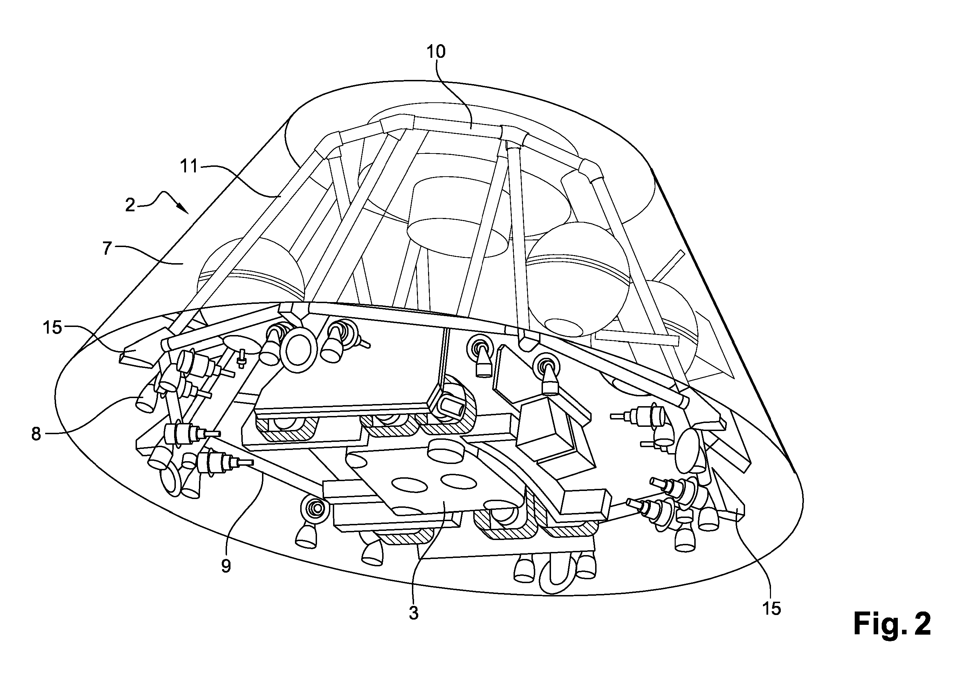

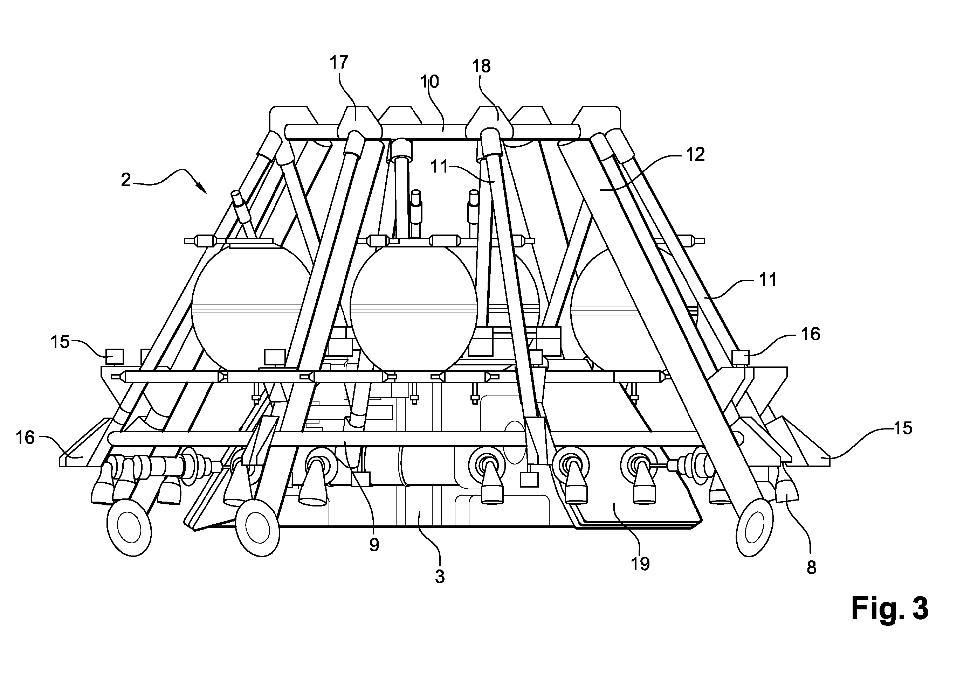

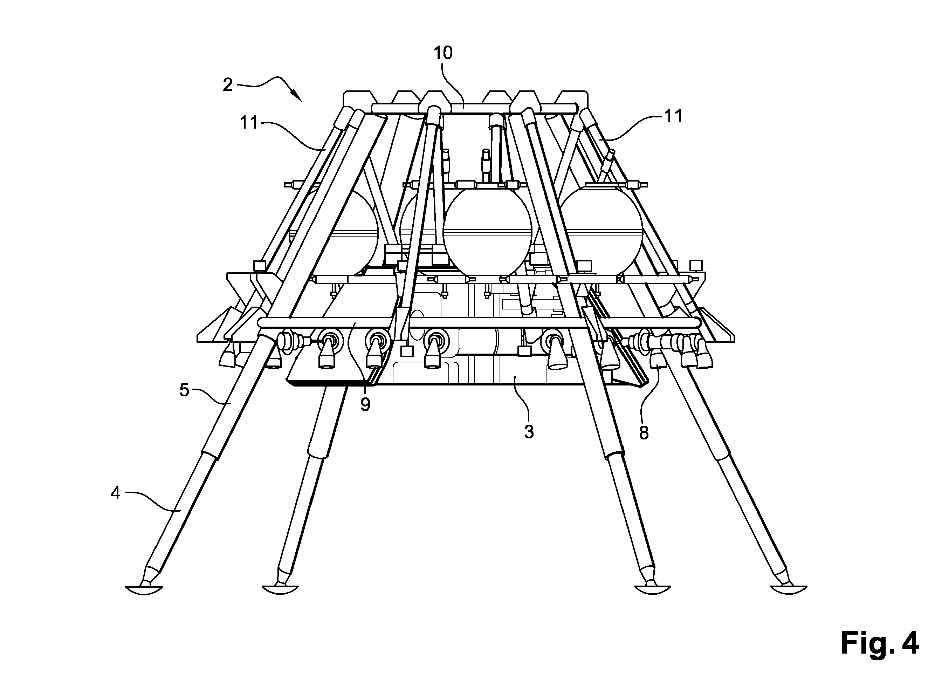

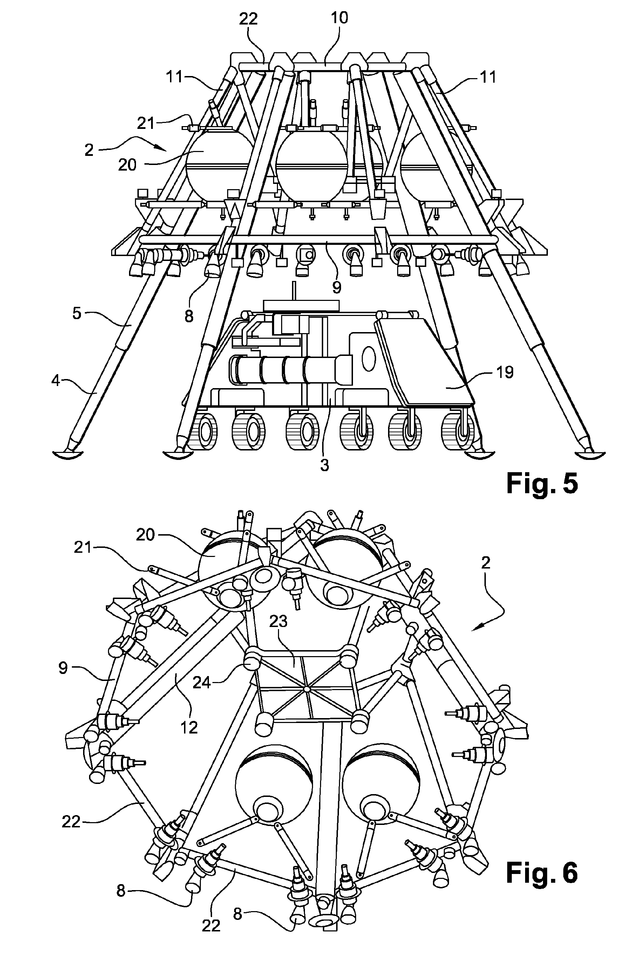

D'autres caractéristiques et avantages de l'invention seront mieux compris à la lecture de la description qui suit d'un exemple de réalisation non limitatif de l'invention en référence aux dessins qui représentent:
en figure 1: une vue en perspective d'une sonde de l'invention équipée de son capotage arrière en transparence et de son bouclier;
en figure 2: une vue en perspective de la sonde de la figure 1 sans son bouclier;
en figure 3: la sonde de la figure 1 de côté, module de descente en configuration de vol piloté sans capotage arrière et sans bouclier;
en figure 4: la sonde de la figure 1 module de descente en configuration d'atterrissage;
en figure 5: la sonde de la figure 1 après atterrissage et engin d'exploration posé au sol.
en figure 6: une vue en perspective de dessous d'un exemple de réalisation du module de descente et d'atterrissage.

La sonde spatiale 1 de la présente invention représentée complète à la figure 1 est une sonde destinée à déposer un engin d'exploration d'une planète et s'applique en particulier à une sonde martienne.

Elle comporte un module de descente 2 porteur d'un engin d'exploration mobile 3.

La sonde représentée en figure 1 est munie d'un bouclier thermique 6 et d'un capotage arrière 7 afin de la protéger lors de son entrée dans l'atmosphère d'une planète.

Le capotage arrière 7 comporte des logements concentriques 13 et 14 le logement central logeant un parachute hypersonique propulsé par mortier et le logement périphérique logeant un parachute principal subsonique.

Le module de descente 2 comporte une structure adaptée à porter et libérer le bouclier inférieur 6 et en figure 2, vue montrant une partie du dessous de la sonde avec le bouclier retiré, sont représentées des ferrures 15 permettant l'accrochage du bouclier à la structure inférieure du module de descente.

De même, le module de descente comporte une structure adaptée à porter le capotage arrière 7 et la figure 3 permet de voir des plots d'accrochage inférieurs 16 et supérieurs 17 permettant de fixer le capotage arrière 7 sur la structure du module de descente.

Selon l'invention, le module de descente est un module atterrisseur 2 à l'intérieur duquel s'accroche l'engin d'exploration mobile comme représenté par exemple aux figures 2 et 3.

Plus particulièrement, l'engin d'exploration mobile s'accroche dans une partie inférieure du module atterrisseur, par exemple sous une platine 23 plus particulièrement représentée à la figure 6 de sorte que l'engin d'exploration mobile puisse être libéré du module 2 par le dessous du module 2.

Le module atterrisseur est muni de jambes d'atterrissage 4, représentées en particulier à la figure 4, adaptées à se déployer au dessous du niveau inférieur de l'engin d'exploration mobile 3.

Les jambes d'atterrissage sont des jambes télescopiques munies de moyens amortisseurs 5 adaptés à amortir le choc de l'atterrissage du module atterrisseur.

Selon la figure 3, les jambes d'atterrissage 4 sont, selon une position rétractée, logées dans des tubes 12 disposés en périphérie du module atterrisseur 2.

Cette position rétractée des jambes correspond à la configuration de descente et de vol du module.

Selon un mode de réalisation avantageux de l'invention, le module atterrisseur 2 est réalisé sous forme d'une ossature entourant l'engin d'exploration mobile.

Cette ossature porte le capotage arrière 7 et contribue à lui donner sa rigidité, le capotage pouvant ainsi être réalisé en tenant compte uniquement des contraintes thermiques auxquelles il doit résister pour protéger le module d'atterrissage et l'engin d'exploration.

Le module atterrisseur comme représenté notamment à la figure 5 comporte un cadre supérieur 10 de forme générale annulaire d'un premier diamètre, un cadre inférieur 9 de forme générale annulaire d'un second diamètre supérieur au premier diamètre et des montants périphériques 11 reliant le cadre supérieur au cadre inférieur.

Les cadres supérieur 10 et inférieur 9 sont réalisés avec des barres 22 reliées par des pièces de liaison en T 18 recevant aussi les montants 11.

Cette constitution en treillis formant une ossature externe autour de l'engin d'exploration est légère et rigide. En outre, capotage arrière et boucliers largués et une fois l'engin d'exploration posé, cette structure ajourée laisse passer les rayons solaires jusqu'aux panneaux solaires 19 de l'engin d'exploration ce qui permet de le rendre opérationnel et d'alimenter ses moteurs pour qu'il puisse sortir de dessous le module d'atterrissage.

Pour son pilotage dans la phase de descente finale et d'atterrissage, le module atterrisseur comporte des tuyères de freinage 8.

Ces tuyères sont alimentées par un circuit d'alimentation à partir de réservoirs 20 fixés sur la structure du module par des bielles 21 repérés à la figure 5.

Sur les figures, les réservoirs n'étant pas à l'échelle, la position des bielles n'est pas représentée avec exactitude.

Selon l'exemple représenté, au moins certaines des tuyères de freinage sont disposées à la périphérie du cadre inférieur 9 du module atterrisseur. Selon l'exemple représenté, comme par exemple à la figure 6, les tuyères sont réparties et fixées sur les barres 22 du cadre inférieur, chaque barre recevant deux tuyères, les tuyères étant disposées à proximité des extrémités des barres.

Comme vu plus haut, le module de descente et d'atterrissage de l'invention comporte des jambes d'atterrissage. Pour réduire l'encombrement du module en phase de vol, les jambes d'atterrissage 4 sont rétractables et sont logées, selon une position rétractée, dans des tubes 12 disposés parallèlement à certains des montants périphériques 11.

La sonde spatiale de l'invention permet un déploiement simple et sûr d'un engin d'exploration, permet en outre, en contrôlant la descente du module d'atterrissage, de choisir un site d'atterrissage propice à la dépose de l'engin d'exploration et permet enfin de limiter la quantité de carburant nécessaire à l'atterrissage de la sonde.

Le procédé de déploiement de la sonde spatiale 1 comportant le module de descente et d'atterrissage 2 porteur d'un engin d'exploration mobile 3, pour lequel l'engin d'exploration mobile s'accroche sous le module de descente comporte ainsi une séquence d'atterrissage de la sonde comportant:
- une phase de freinage du module de descente et d'atterrissage conduit par propulsion au moyen de tuyères 8 d'éjection de gaz propulsifs pendant laquelle le module peut être piloté pour choisir un site d'atterrissage adéquat, ce depuis une altitude de 500 à 1000 mètres, le module étant alors dans la configuration de la figure 3,
- une étape de déploiement de jambes d'atterrisseur 4 du module de descente et d'atterrissage 2 en fin de descente et avant l'atterrissage faisant passer le module dans la configuration de la figure 4 jambes déployées,
- une étape d'atterrissage du module de descente et d'atterrissage pourvu de l'engin d'exploration mobile 3, pour laquelle les amortisseurs 5 des jambes encaissent le choc de l'atterrissage,
- une étape de dépose de l'engin d'exploration mobile 3 entre les jambes d'atterrisseur 4 module de descente et d'atterrissage 2 posé au sol.

Selon l'exemple de la figure 6, l'engin d'exploration est fixé sous une platine 23 du module atterrisseur au moyen de plots 24 et, pour la dernière étape, soit l'engin mobile est simplement décroché des plots 24 et tombe de la hauteur des pieds 4, soit l'engin se décroche des plots et est ralenti dans sa chute par des câbles freinés.

Avant la séquence d'atterrissage, le procédé de déploiement de la sonde comprend une séquence de descente comportant:
- une phase d'entrée de la sonde dans l'atmosphère d'une planète, module de descente et d'atterrissage recouvert du capotage arrière 7 et du bouclier 6, le bouclier servant dans un premier temps de dispositif de freinage, depuis l'entrée dans l'atmosphère jusqu'à une vitesse de l'ordre de mach 2, la sonde étant dans la configuration de la figure 1, le freinage étant ensuite réalisé par un parachute hypersonique éjecté par un mortier depuis un logement 13 représenté en figure 1 jusqu'à une vitesse inférieure à mach 1,
- au moins une phase de ralentissement du module de descente et d'atterrissage muni de son capotage arrière 7 et de son bouclier 6 sous parachute principal, le parachute principal étant déployé depuis un logement 14 après largage du mortier et du parachute hypersonique,
- une étape de largage du bouclier 6, la différence des coefficients balistiques du bouclier 6 et de la sonde sous parachute principal permettant au bouclier de s'éloigner rapidement de la sonde, la sonde se trouvant alors dans la configuration de la figure 2.

Une fois l'altitude ramenée à environ 500 à 1000 mètres, le procédé comporte une étape de largage du capotage arrière 7 et du parachute principal, le module de descente et d'atterrissage 2 passant ensuite en vol piloté au moyen des tuyères 8 pour terminer sa descente et finir de ralentir comme dans la configuration de la figure 3.

En fin de descente et avant l'atterrissage, le module de descente déploie ses jambes et enfin, une fois le module de descente et d'atterrissage 2 posé au sol, le procédé de déploiement de sonde de l'invention prévoit que l'engin d'exploration mobile 3 se dégage du dessous du module de descente et d'atterrissage par un déplacement entre les jambes d'atterrisseur 4 du module de descente et d'atterrissage.

Ce déplacement peut être effectué après ouverture au moins partielle des panneaux solaires 19 de l'engin afin d'alimenter les moteurs de l'engin.

La sonde de l'invention est optimisée en masse par le dimensionnement des éléments constituant le module de descente et d'atterrissage, le dimensionnement du capotage arrière et le maintien du module de descente sous parachute principal jusqu'à une altitude relativement basse pour limiter la quantité de carburant nécessaire pour la dernière phase de descente.

L'invention ne se limite pas à l'exemple décrit mais englobe les variantes couvertes par les revendications et notamment, l'exemple représenté comporte quatre jambes, mais d'autres configurations telles que 5 ou 6 jambes sont envisageables.

## Revendications

1. Sonde spatiale (1) comportant un module de descente porteur d'un engin d'exploration mobile (3), le module de descente étant un module atterrisseur (2) à l'intérieur duquel s'accroche l'engin d'exploration mobile, le module atterrisseur étant muni de jambes d'atterrissage (4), **caractérisé en ce que** l'engin d'exploration mobile s'accroche dans une partie inférieure du module atterrisseur de sorte que l'engin d'exploration mobile puisse être libéré du module par le dessous du module, et **en ce que** les jambes d'atterrissage sont adaptées à se déployer au dessous du niveau inférieur de l'engin d'exploration mobile.

2. Sonde spatiale selon la revendication 1 **caractérisée en ce que** les jambes d'atterrissage sont des jambes télescopiques munies de moyens amortisseurs (5) adaptés à amortir le choc de l'atterrissage du module atterrisseur.

3. Sonde spatiale selon la revendication 1 ou 2 **caractérisée en ce que** le module atterrisseur (2) comporte une structure adaptée à porter et libérer un bouclier inférieur (6).

4. Sonde spatiale selon la revendication 1, 2 ou 3 **caractérisée en ce que** le module atterrisseur comporte une structure adaptée à porter un capotage arrière (7).

5. Sonde spatiale selon l'une quelconque des revendications précédentes pour laquelle le module atterrisseur (2) est réalisé sous forme d'une ossature entourant l'engin d'exploration mobile.

6. Sonde spatiale selon les revendications 4 et 5 pour laquelle l'ossature porte le capotage arrière (7).

7. Sonde spatiale selon l'une quelconque des revendications précédentes **caractérisée en ce que** le module atterrisseur comporte des tuyères de freinage (8).

8. Sonde spatiale selon la revendication 7 **caractérisée en ce que** au moins certaines des tuyères de freinage sont disposées à la périphérie d'un cadre inférieur (9) du module atterrisseur.

9. Sonde spatiale selon l'une quelconque des revendications précédentes **caractérisée en ce que** le module atterrisseur comporte un cadre supérieur (10) de forme générale annulaire d'un premier diamètre, un cadre inférieur (9) de forme générale annulaire d'un second diamètre supérieur au premier diamètre et des montants périphériques (11) reliant le cadre supérieur au cadre inférieur.

10. Sonde spatiale selon la revendication 9 **caractérisée en ce que** les jambes d'atterrissage (4) sont, selon une position rétractée, logées dans des tubes (12) disposés parallèlement à certains des montants périphériques (11).

11. Procédé de déploiement d'une sonde spatiale (1) comportant un module de descente et d'atterrissage (2) porteur d'un engin d'exploration mobile (3), pour lequel l'engin d'exploration mobile s'accroche sous le module de descente **caractérisé en ce qu'**il comporte une séquence d'atterrissage de la sonde comportant:
- une phase de freinage du module de descente et d'atterrissage conduit par propulsion au moyen de tuyères (8) d'éjection de gaz propulsifs,
- une étape de déploiement de jambes d'atterrisseur (4) du module de descente et d'atterrissage (2),
- une étape d'atterrissage du module de descente et d'atterrissage pourvu de l'engin d'exploration mobile (3),
- une étape de dépose de l'engin d'exploration mobile (3) entre les jambes d'atterrisseur (4) du module de descente et d'atterrissage (2) posé au sol.

12. Procédé de déploiement d'une sonde spatiale selon la revendication 11 **caractérisé en ce qu'**il comprend avant la séquence d'atterrissage une séquence de descente comportant:
- une phase d'entrée de la sonde dans l'atmosphère d'une planète, module de descente et d'atterrissage recouvert d'un capotage arrière (7) et d'un bouclier (6),
- au moins une phase de ralentissement du module de descente et d'atterrissage muni de son capotage arrière (7) et de son bouclier (6) sous parachute principal,
- une étape de largage du bouclier (6),
- une étape de largage du capotage arrière (7) et du parachute principal, le module de descente et d'atterrissage (2) passant ensuite en vol piloté au moyen de tuyères (8).

13. Procédé de déploiement d'une sonde spatiale (1) selon la revendication 11 ou 12 **caractérisé en ce que** module de descente et d'atterrissage (2) posé au sol, l'engin d'exploration mobile (3) se dégage du dessous du module de descente et d'atterrissage par un déplacement de l'engin d'exploration entre les jambes d'atterrisseur (4) du module de descente et d'atterrissage.

## Patentansprüche

1. Raumsonde (1), umfassend ein Abstiegsmodul, das eine mobile Explorationsvorrichtung (3) trägt, wobei das Abstiegsmodul ein Landemodul (2) ist, in dem die mobile Explorationsvorrichtung befestigt ist, wobei das Landemodul mit Landebeinen (4) versehen ist, **dadurch gekennzeichnet, dass** die mobile Explorationsvorrichtung in einem unteren Teil des Landemoduls befestigt ist, so dass die mobile Explorationsvorrichtung von dem Modul von unterhalb des Moduls getrennt werden kann, und dass die Landebeine dazu geeignet sind, unter dem unteren Niveau der mobilen Explorationsvorrichtung ausgefahren zu werden.

2. Raumsonde nach Anspruch 1, **dadurch gekennzeichnet, dass** die Landebeine Teleskopbeine sind, die mit Dämpfungsmitteln (5) versehen sind, die geeignet sind, den Landeaufprall des Landemoduls zu dämpfen.

3. Raumsonde nach Anspruch 1 oder 2, **dadurch gekennzeichnet, dass** das Landemodul (2) eine Struktur umfasst, die geeignet ist, einen unteren Schild (6) zu tragen und freizugeben.

4. Raumsonde nach Anspruch 1, 2 oder 3, **dadurch gekennzeichnet, dass** das Landemodul eine Struktur umfasst, die dazu geeignet ist, eine hintere Abdeckung (7) zu tragen.

5. Raumsonde nach einem der vorhergehenden Ansprüche, bei der das Landemodul (2) in Form eines Gerüsts, das die mobile Explorationsvorrichtung umgibt, ausgeführt ist.

6. Raumsonde nach den Ansprüchen 4 und 5, bei der das Gerüst die hintere Abdeckung (7) trägt.

7. Raumsonde nach einem der vorhergehenden Ansprüche, **dadurch gekennzeichnet, dass** das Landemodul Bremsdüsen (8) umfasst.

8. Raumsonde nach Anspruch 7, **dadurch gekennzeichnet, dass** mindestens gewisse der Bremsdüsen an der Peripherie eines unteren Rahmens (9) des Landemoduls angeordnet sind.

9. Raumsonde nach einem der vorhergehenden Ansprüche, **dadurch gekennzeichnet, dass** das Landemodul einen oberen Rahmen (10) von allgemeiner Ringform mit einem ersten Durchmesser, einen unteren Rahmen (9) von allgemeiner Ringform mit einem zweiten Durchmesser, größer als der erste Durchmesser, und Umfangssteher (11) umfasst, die den oberen Rahmen mit dem unteren Rahmen verbinden.

10. Raumsonde nach Anspruch 9, **dadurch gekennzeichnet, dass** die Landebeine (4) in einer eingezogenen Position in Rohren (12) angeordnet sind, die parallel zu gewissen der Umfangssteher (11) angeordnet sind.

11. Verfahren zum Ausfahren einer Raumsonde (1), umfassend ein Abstiegs- und Landemodul (2), das eine mobile Explorationsvorrichtung (3) trägt, bei dem die mobile Explorationsvorrichtung unter dem Abstiegsmodul befestigt ist, **dadurch gekennzeichnet, dass** es eine Landsequenz der Sonde aufweist, umfassend:
- eine Bremsphase des Abstiegs- und Landemoduls, die durch Antrieb mit Hilfe von Auswurfdüsen (8) von Antriebsgasen durchgeführt wird,
- einen Schritt des Ausfahrens der Landebeine (4) des Abstiegs- und Landemoduls (2),
- einen Schritt des Landens des Abstiegs- und Landemoduls, das mit der mobilen Explorationsvorrichtung (3) versehen ist,
- einen Schritt des Abstellens der mobilen Explorationsvorrichtung (3) zwischen den Landebeinen (4) des am Boden stehenden Abstiegs- und Landemoduls (2).

12. Verfahren zum Ausfahren einer Raumsonde nach Anspruch 11, **dadurch gekennzeichnet, dass** es vor der Landesequenz eine Abstiegssequenz aufweist, umfassend:
- eine Phase des Eintritts der Sonde in die Atmosphäre eines Planeten, wobei das Abstiegs- und Landemodul von einer hinteren Abdeckung (7) und einem Schild (6) bedeckt ist,
- mindestens eine Phase zur Verlangsamung des Abstiegs- und Landemoduls, das mit seiner hinteren Abdeckung (7) und seinem Schild (6) unter dem Hauptschirm versehen ist,
- einen Schritt des Abwurfs des Schildes (6),
- einen Schritt des Abwurfs der hinteren Abdeckung (7) und des Hauptschirms, wobei das Abstiegs- und Landemodul (2) sodann in den bemannten Flug mit Hilfe von Düsen (8) übergeht.

13. Verfahren zum Ausfahren einer Raumsonde (1) nach Anspruch 11 oder 12, **dadurch gekennzeichnet, dass** das Abstiegs- und Landemodul (2) am Boden steht, sich die mobile Explorationsvorrichtung (3) von unterhalb des Abstiegs- und Landemoduls durch eine Verschiebung der Explorationsvorrichtung zwischen den Landebeinen (4) des Abstiegs- und Landemoduls löst.

## Claims

1. Space probe (1) comprising a descent module bearing a mobile exploration craft (3), the descent module being a landing module (2) inside which the mobile exploration craft is attached, the landing module being equipped with landing legs (4), **characterized in that** the mobile exploration craft is attached in a lower part of the landing module so that the mobile exploration craft can be released from the module from underneath the module, and **in that** the landing legs are designed to deploy below the lower level of the mobile exploration craft.

2. Space probe according to Claim 1, **characterized in that** the landing legs are telescopic legs provided with shock-absorbing means (5) designed to deaden the shock of the landing of the landing module.

3. Space probe according to Claim 1 or 2, **characterized in that** the landing module (2) comprises a structure designed to carry and release a lower shield (6).

4. Space probe according to Claim 1, 2 or 3, **characterized in that** the landing module comprises a structure designed to bear a rear fairing (7).

5. Space probe according to any one of the preceding claims, for which the landing module (2) is produced in the form of a framework surrounding the mobile exploration craft.

6. Space probe according to Claims 4 and 5, for which the framework bears the rear fairing (7).

7. Space probe according to any one of the preceding claims, **characterized in that** the landing module comprises brake rockets (8).

8. Space probe according to Claim 7, **characterized in that** at least some of the brake rockets are positioned at the periphery of a lower frame (9) of the landing module.

9. Space probe according to any one of the preceding claims, **characterized in that** the landing module comprises an upper frame (10) of annular overall shape with a first diameter, a lower frame (9) of annular overall shape with a second diameter greater than the first diameter and peripheral uprights (11) connecting the upper frame to the lower frame.

10. Space probe according to Claim 9, **characterized in that** the landing legs (4) are, in a retracted position, housed in tubes (12) positioned parallel to some of the peripheral uprights (11).

11. Method of deploying a space probe (1) comprising a descent and landing module (2) bearing a mobile exploration craft (3), for which the mobile exploration craft is attached under the descent module, **characterized in that** it comprises a probe landing sequence involving:
- a phase of braking the descent and landing module which is performed by propulsion using rockets (8) that eject propulsion gases,
- a step of deploying landing legs (4) of the descent and landing module (2),
- a step of landing the descent and landing module provided with the mobile exploration craft (3),
- a step of laying down the mobile exploration craft (3), between the landing legs (4) of the descent and landing module (2) resting on the ground.

12. Method of deploying a space probe according to Claim 11, **characterized in that** it comprises, prior to the landing sequence, a descent sequence involving:
- a phase of entry of the probe into the atmosphere of a planet, with the descent and landing module covered by a rear fairing (7) and a shield (6),
- at least one phase of slowing the descent and landing module fitted with its rear fairing (7) and with its shield (6) using a main parachute,
- a step of jettisoning the shield (6),
- a step of jettisoning the rear fairing (7) and the main parachute, the descent and landing module (2) then entering steered flight using rockets (8).

13. Method of deploying a space probe (1) according to Claim 11 or 12, **characterized in that** with the descent and landing module (2) resting on the ground, the mobile exploration craft (3) is disengaged from underneath the descent and landing module by a movement of the exploration craft between the landing legs (4) of the descent and landing module.
